# EUROPEAN PATENT APPLICATION

(11) **EP 4 060 095 A1**
(43) Date of publication of application: **21.09.2022**
(21) Application number: 21215103.9
(22) Date of filing: 16.12.2021
(51) Int. Cl.: C25D 11/02, C25D 11/16, F16J 9/00

(54) **PISTON FOR INTERNAL COMBUSTION ENGINE AND METHOD FOR MANUFACTURING THE SAME**

(30) Priority: 18.03.2021 JP 2021044604
(71) Applicant: Suzuki Motor Corporation, Shizuoka 432-8611 (JP)
(72) Inventor: MASUHARA, Shinya, Hamamatsu-shi, 432-8611 (JP); MURAMATSU, Hitoshi, Hamamatsu-shi, 432-8611 (JP)
(74) Representative: Henkel & Partner mbB

(57) **Abstract**

[Problem to be Solved] To provide a piston for an internal combustion engine and a method for manufacturing the same, ensuring improved heat insulation performance in a top ring groove irrespective of a base material made of an aluminum alloy with greater Cu content compared with a conventional case, and to maintain sealing property with a piston ring by maintaining smoothness of an inner surface of the top ring groove.

[Solution] In a method for manufacturing a piston for an internal combustion engine according to the present invention, a masking step is performed on a main body of the piston made of an aluminum alloy as the base material 10, which contains Si at 5.0 to 20.0%, and Cu at 1.3% to 5.0% to expose the inner surface of the top ring groove. The main body of the piston is immersed in an aqueous mixed acid solution for eluting Cu in a region 27a with a depth corresponding to 1/2 or more of a thickness of an anodized film to be formed from the inner surface of the top ring groove so that the anodized film is formed. The piston for an internal combustion engine is provided with a heat insulation layer 27b between the base material 10 and the anodized film 20, which has a Cu content less than that of the base material.

## Description

### [Technical Field]

The present invention relates to a piston for an internal combustion engine and to a method for manufacturing the same. Specifically, the present invention relates to a piston for an internal combustion engine, the piston having an anodized film formed on an inner surface of a top ring groove, and relates to a method for manufacturing the same.

### [Background Art]

Recently, various demands for high efficiency and high compression ratio in internal combustion engines such as automobile engines, and engines with a supercharger, have been increasing to meet environmental regulations, boosting the maximum combustion pressure in the internal combustion engine. From such circumstances, the temperature of each of the piston ring groove (in particular, the top ring groove), and the lands (in particular, the first land, the second land) of pistons for internal combustion engines has become higher compared with conventional internal combustion engines with the same displacement. There may be the cases in which the top ring groove of the piston is provided with an anodized film for imparting wear resistance since the anodized film is twice as hard or harder than the aluminum alloy that constitutes a base material of the piston so as to exhibit excellent wear resistance characteristics.

Patent Literature 1 discloses a dense anodized film with uniform thickness as well as high shock resistance, which is provided for a piston with its base material made of aluminum alloy with excellent corrosion resistance having more impurities and/or additives (silicon (Si) and the like) deposited. The anodized film is configured to grow its cell in random directions without orientation relative to the aluminum alloy surface, and to allow the cell to surround a periphery of the impurities and/or additives to form a spherical or elliptical shape so that these cells are gathered in a grape-like cluster.

### [Citation List]

### [Patent Literature]

[Patent Literature 1] JP 2006-083467 A

### [Summary of Invention]

In a recent trend, as use of aluminum alloys with improved mechanical characteristics (fatigue strength, tensile strength, and the like) secured in the high temperature zone of socalled high-strength materials has been increasing, there may be cases in which the aluminum alloy contains more additive elements such as copper (Cu) and nickel (Ni) compared with the typical aluminum alloy prescribed by JIS (Japanese Industrial Standards)-AC8A (Al-Si-Cu-Ni-Mg-based) alloy. In particular, thermal conductivity of copper is 1.5 or more times greater than that of aluminum (Al). The use of the aluminum alloy as the high-strength material that contains greater amounts of added copper for forming the piston as the base material may cause the risk of reducing thermal insulation performance.

Heat generated in the combustion chamber of the internal combustion engine is transferred to the base material at the side of the cylinder bore and at the side of the top ring groove from the piston ring via the gap between the piston and the cylinder bore. When the temperature of the base material at the top ring groove side becomes high, the base material is softened, deteriorating smoothness of the top ring groove. The deteriorated smoothness reduces the sealing property between the piston ring and the top ring groove, causing a phenomenon in which oil used for lubrication in the internal combustion engine flows into the combustion chamber (rise of oil). Oil combustion in the combustion chamber may cause the risk of generating substances that are targets of European environmental regulations such as PM (Particulate Matter), and increasing the number of the substances such as PN (Particle Number).

In view of the problems, an object of the present invention is to provide a piston for an internal combustion engine, which ensures improving heat insulation performance at the top ring groove even when using the base material made of aluminum alloy with greater Cu content compared with conventional cases, and to maintain good sealing property with the piston ring by maintaining smoothness of the inner surface of the top ring groove, and a method for manufacturing the same.

To attain the object, the present invention provides a method for manufacturing a piston for an internal combustion engine as an embodiment. The method includes a masking step for masking a main body of the piston for an internal combustion engine, which is made of an aluminum alloy as a base material that contains Si at 5.0 to 20.0 mass%, and Cu at more than 1.3 mass% to 5.0 mass% or less to expose at least an inner surface of a top ring groove; a mixed acid immersion treatment step for immersing the masked main body of the piston in aqueous mixed acid solution, and eluting Cu in a region with a depth from the inner surface of the exposed top ring groove, the depth corresponding to 1/2 or more of a thickness of an anodized film to be formed; and an anodizing treatment step for forming the anodized film with the expected thickness on the inner surface of the top ring groove of the main body of the piston taken from the aqueous mixed acid solution.

The present invention provides a piston for an internal combustion engine, the piston having a top ring groove, as another embodiment. The piston includes an aluminum alloy as a base material that contains Si at 5.0 to 20.0 mass%, and Cu at more than 1.3 mass% to 5.0 mass%, a heat insulation layer positioned on an inner surface of the top ring groove, which has an aluminum alloy composition with a Cu content lower than that of the base material, and an anodized film positioned on a surface of the heat insulation layer.

In the present invention, even when using the base material made of the aluminum alloy with greater Cu content compared with a conventional case, the top ring groove is provided with the anodized film via the heat insulation layer having an aluminum alloy composition with the Cu content less than that of the base material. This makes it possible to improve heat insulation performance to the base material at the top ring groove. Accordingly, it is possible to prevent softening of the base material at the top ring groove, and to maintain the smoothness and good sealing property with the piston ring.

### [Brief Description of Drawings]

[Fig. 1] Fig. 1 is a sectional view of a piston for an internal combustion engine as an embodiment according to the present invention, which schematically illustrates a periphery of a top ring groove.
[Fig. 2] Figs. 2A, 2B and 2C are an enlarged sectional view schematically illustrating an area around an inner surface of a top ring groove as an embodiment of the piston for an internal combustion engine, and a method for manufacturing the same according to the present invention.
[Fig. 3] Fig. 3 is a flow diagram representing an embodiment of a method for manufacturing the piston for an internal combustion engine according to the present invention.
[Fig. 4] Fig. 4 is a detailed flow diagram representing a mixed acid immersion treatment step of a method for manufacturing the piston for an internal combustion engine as shown in Fig. 3.
[Fig. 5] Fig. 5 is a graph representing each relationship between a mixed acid immersion time and a surface roughness of the top ring groove according to Example 1 and Comparative Example 1.
[Fig. 6] Figs. 6A and 6B show photographed images of the top ring groove surface before and after mixed acid immersion according to Example 1.
[Fig. 7] Figs. 7A and 7B show photographed images of cross sections of the top ring groove surface before and after mixed acid immersion according to Example 1.
[Fig. 8] Fig. 8 shows a photographed image of a surface of an anodized film according to Example 2.
[Fig. 9] Fig. 9 shows a photographed image of a surface of an anodized film according to Comparative Example 2.
[Fig. 10] Fig. 10 shows a photographed image of a cross section of the anodic oxidation coated top ring groove according to Example 2.
[Fig. 11] Fig. 11 shows a photographed image of a cross section of the anodic oxidation coated top ring groove according to Comparative Example 2.

### [Mode for Carrying Out the Invention]

Referring to the drawings, an explanation will be made with respect to an embodiment of the piston for an internal combustion engine and a method for manufacturing the same according to the present invention. The drawings are not illustrated to scale since they are intended to be readily understood.

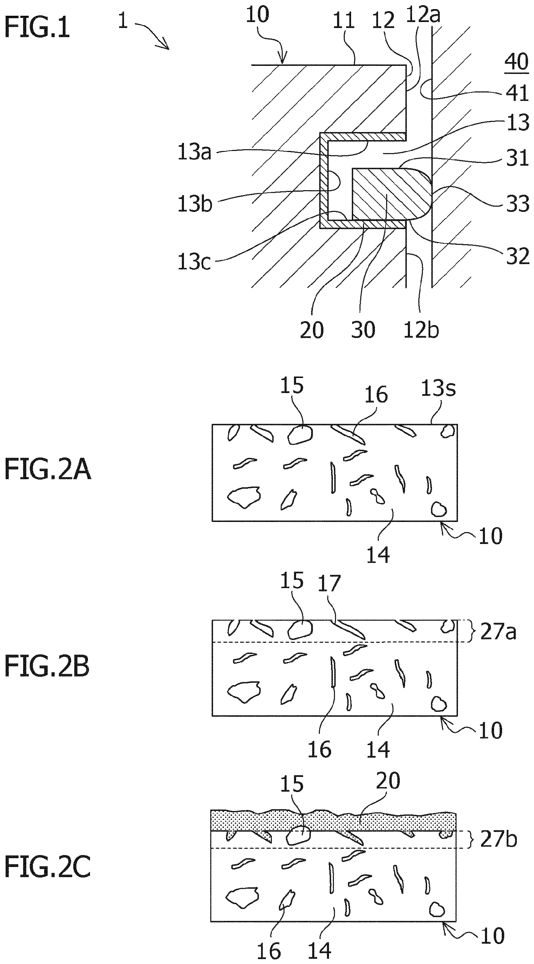

As shown in Fig. 1, an aluminum alloy with improved mechanical characteristics, which contains Si at 5.0 to 20.0 mass% and Cu at more than 1.3 mass% to 5.0 mass% is used as a base material 10 for forming a piston 1 for an internal combustion engine according to the embodiment. An anodized film 20 is formed on the base material surface of a top ring groove 13 via a heat insulation layer (not shown).

The Si component of the aluminum alloy of the base material 10 is crystallized as a primary crystal silicon or an eutectic silicon to improve heat resistance and wear resistance. The Si component lowers the thermal expansion coefficient. The Si content equal to or greater than 5.0 mass% makes the thermal expansion coefficient lower, improving wear resistance and strength in the high temperature zone. The content equal to or less than 20.0 mass% makes the primary crystal silicon smaller, improving elongation of the alloy. Preferably, the Si content is in a range from 10.0 to 13.0 mass%.

The Cu component improves mechanical strength and wear resistance in a room temperature range and a high temperature range. The Cu content of more than 1.3 mass% ensures exhibition of the effect of improving the strength and the wear resistance. A content equal to or less than 5.0 mass% hardly causes significant reduction in elongation of the alloy, resulting in low density alloy. In addition, a content of more than 5.0 mass% significantly reduces elongation, resulting in a high density alloy. Preferably, the Cu content is in the range of 2.5 to 5.0 mass%.

Three ring grooves are formed in an outer circumferential surface 12 of the piston 1, that is, a top ring groove (first ring groove) 13, a second ring groove (not shown), and an oil ring groove (not shown) from a piston crown surface 11. A top ring (first ring) 30 is fitted with the top ring groove 13, a second ring (not shown) is fitted with the second ring groove, and an oil ring (not shown) is fitted with the oil ring groove (not shown). A section between the piston crown surface 11 and the top ring groove 13 along the outer circumferential surface 12 is called a first land 12a. A section between the top ring groove 13 and the second ring groove (not shown) is called a second land 12b. A section between the second ring groove and the oil ring groove (not shown) is called a third land (not shown).

The ring such as the top ring 30 is formed of a high carbon steel, martensitic stainless steel, or the like. The ring, such as the top ring 30, has substantially a C-like shape having an open part in a circumferential direction. The ring is inserted into the ring groove such as the top ring groove 13 while having its diameter elastically widened. The ring is then elastically restored to reduce its diameter and is fitted to the inside of the ring groove. An outer circumferential surface 33 of the top ring 30 protrudes outward from the outer circumferential surface 12 of the piston 1. An outer circumferential surface of the other (not shown) ring protrudes outward from the outer circumferential surface 12. The piston 1 provided with the respective rings is inserted into a cylinder 40 while having each diameter of the rings elastically reduced. In the state in which the piston 1 is inserted into the cylinder 40, the respective rings are pressed against an inner wall surface 41 of the cylinder 40 by their elastic force. The top ring 30 and the second ring serve to hold the airtightness of the combustion chamber. The oil ring serves to scrape off the residual oil on the inner wall surface 41 of the cylinder 40.

The top ring groove 13 has an inner surface closer to the piston crown surface 11, which is called an upper surface 13a, an inner surface closer to the second ring groove (not shown), which is called a lower surface 13c, and an inner surface at the bottom of the groove between those surfaces, which is called a side surface 13b. The anodized film 20 is formed on the upper surface 13a, the side surface 13b, and the lower surface 13c of the top ring groove 13. As the inner pressure of the combustion chamber at the side closer to the piston crown surface 11 becomes high in the compression stroke and the expansion stroke of the piston 1, a lower surface 32 of the top ring 30 is strongly brought into tight contact with the lower surface 13c of the top ring groove 13. Although not shown, an upper surface 31 of the top ring 30 is brought into tight contact with the upper surface 13a of the top ring groove 13 in the intake stroke. In repetitive operations of those strokes, the top ring 30 moves between the upper surface 13a and the lower surface 13c of the top ring groove 13. Accordingly, wear is likely to occur between the inner surface of the top ring groove 13 and the top ring 30. For this reason, the anodized film 20 is formed on the inner surface of the top ring groove 13 of the piston 1, which includes the upper surface 13a and the lower surface 13c. The anodized film 20 may be formed on the piston crown surface 11 in addition to the inner surface of the top ring groove 13. In this case, the anodized film 20 may be formed on the intervening first land 12a. The second ring groove (not shown) may be provided with the anodized film 20 on the second land 12b.

Referring to Fig. 2, detailed explanation will be made with respect to a structure of the top ring groove having the anodized film formed on the base material surface via the heat insulation layer.

As shown in Fig. 2A, the base material 10 for the piston for an internal combustion engine is made of the aluminum alloy with a higher Cu content compared with the conventional case. The base material 10 has a primary crystal silicon 15 and a needle-like silicon 16 crystallized in an α-phase 14. The α-phase 14 is formed through solid solution of other elements such as Cu in aluminum (Al). The primary crystal silicon 15 is formed as a relatively large mass derived from crystallization of Si in manufacturing the main body of the piston. A particle diameter of the primary crystal silicon 15 is in a range from approximately 30 to 40 µm. Similarly, the needle-like silicon 16 is derived from crystallization of Si in manufacturing of the main body of the piston, and it contains copper.

As shown in Fig. 2B, the mixed acid immersion treatment, to be described in detail later, is executed on an inner surface 13s of the top ring groove 13 to elute the Cu containing needle-like silicon 16 on a surface part of the base material 10 as well as the Cu component from the α-phase 14, resulting in formation of a heat insulation layer 27a with the aluminum alloy composition having Cu concentration made lower than that of the base material. Although the primary crystal silicon 15 is also eluted in the heat insulation layer 27a, the primary crystal silicon 15 is partially kept non-eluted.

As shown in Fig. 2C, anodic oxidation of the heat insulation layer 27a forms the anodized film 20 on the surface of a heat insulation layer 27b, which will be described in detail later. The anodized film 20 derived from oxidizing aluminum in the heat insulation layer 27b has amorphous aluminum oxide (Al₂O₃) as a main component, and exhibits excellent wear resistance. The cell of the anodized film 20 may have various structures depending on electrolysis conditions. Preferably, it is structured to have the cell surrounding a periphery of the primary crystal silicon in the coating while being branched in random directions. This structure corresponds to that of the coating (AC/DC superposition electrolytic coating) formed through the AC/DC superposition electrolytic process, which will be described in detail later. This ensures provision of a coating with improved surface smoothness compared with the coating formed through the DC electrolytic process. A good surface smoothness of the anodized film 20 improves sealing property with the piston ring. The anodized film 20 formed on the surface of the heat insulation layer 27 has many micropores in its surface. Air in the micropores allows the anodized film 20 to further improve heat insulation performance at the top ring groove.

The thickness of the anodized film 20 is decreased as it is worn down by the piston ring 30 in engine operation. It is therefore preferable to set the thickness to 5.0 µm or more, and more preferably, 10 µm or more. Although the upper limit of the thickness of the anodized film 20 is not specifically limited, it is preferable to set the upper limit to 40 µm or less, and more preferably, 30 µm or less.

The heat insulation layer 27 at the top ring groove has a Cu content lower than that of the base material 10. For example, preferably, the heat insulation layer 27 contains substantially no Cu component in the α-phase 14 nor the needle-like silicon 16. Preferably, the primary crystal silicon 15 exists in a quantity less than that of the base material.

As shown in Table 1, Cu exhibits relatively higher thermal conductivity compared to materials for constituting the piston for an internal combustion engine, which is 1.5 or more times higher than Al, for example. Each Cu content of the heat insulation layer 27 and the base material 10 has a significant effect on the heat insulation performance of the top ring groove. The heat insulation layer 27 exhibits lower thermal conductivity because of lower Cu content than that of the base material 10, leading to excellent heat insulation performance. To ensure sufficient heat insulation performance to the base material 10, it is preferable to set the thickness of the heat insulation layer 27b after the anodizing treatment to 1.0 µm or more, more preferably, 5.0 µm or more, and further preferably, 10 µm or more. The upper limit of the thickness of the heat insulation layer 27b is not specifically restricted. However, as time for the mixed acid immersion treatment is prolonged, the influence on the surface smoothness of the top ring groove becomes greater. Accordingly, it is preferable to set the upper limit of the thickness to 30 µm or less, and more preferably, 20 µm or less.

[Table 1]

**Table 1. Thermal Conductivity of Various Materials**

| Material Thermal conductivity W/mk) @ R.T. | |
|---|---|
| Al | 236 |
| Cu | 398 |
| Aluminum Oxide (Al₂O₃) | 67 |
| Conventional Aluminum Alloy (AC8A) | 125 |

Softening of the base material 10 can be suppressed by improving heat insulation performance at the top ring groove. This makes it possible to maintain surface smoothness of the top ring groove as well as sealing property with the top ring. It is therefore possible to prevent oil combustion in the combustion chamber due to rise of oil, in which oil flows into the combustion chamber through the gap between the top ring groove and the top ring. This may prevent generation of a target substance of European environmental regulations such as PM and PN, and suppress increase in the number of these substances.

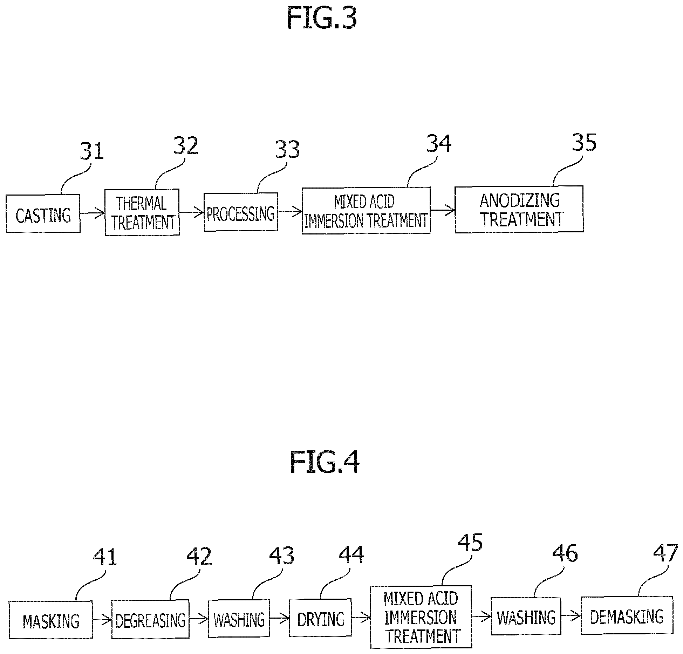

Referring to Figs. 3 and 4, an explanation will be given with respect to an embodiment of a method for manufacturing a piston for an internal combustion engine according to the present invention. As shown in Fig. 3, the method according to the present invention includes at least a step 31 for casting the main body of the piston using the aluminum alloy as the base material, a step 32 for thermally treating the casted main body of the piston, a step 33 for further processing the thermally treated piston to form the piston ring groove including the top ring groove, a step 34 for executing the mixed acid immersion treatment to the top ring groove of the main body of the piston, and a step 35 for executing the anodizing treatment to the top ring groove.

Detailed explanations about respective steps 31, 32, 33 of casting, thermal treatment, and processing will be omitted because they are the same as those executed for manufacturing the conventional piston for an internal combustion engine.

As shown in Fig. 4, the mixed acid immersion treatment step 34 includes a step 41 for masking the main body of the piston, a step 42 for degreasing a part exposed as a result of masking, a step 43 for washing the degreased part, a step 44 for drying the washed part, a step 45 for executing the mixed acid immersion treatment to the dried part, a step 46 for washing the piston after execution of the mixed acid immersion treatment, and a step 47 for demasking.

In the masking step 41, a peripheral area of a target part on which formation of the heat insulation layer is required is covered with a masking member so that no heat insulation layer is formed on a part except the target part. Referring to Fig. 1 indicating the case of forming the heat insulation layer only on the inner surface of the top ring groove 13, the first land 12a and the second land 12b of the piston 1 are covered with the masking member, and the inner surface of the top ring groove 13 is exposed. A rubber material with chemical resistance to mixed acid may be used for forming the masking member, for example, natural rubber, butadiene rubber, styrene rubber, acrylic rubber, urethane rubber, nitrile rubber, silicone rubber and the like. It is more preferable to use nitrile rubber or silicone rubber. The nitrile rubber or the silicone rubber exhibits sufficient resistance against chemicals such as sulfuric acid as the treatment liquid to be used in the anodizing treatment step 35. It is therefore possible to execute the anodizing treatment step 35 while maintaining application of the masking member.

Subsequent to the masking step 41, the degreasing step 42, the washing step 43, and the drying step 44 are executed sequentially. As the steps are similar to those generally performed for removing impurities on a target to be processed, detailed explanations of those steps will be omitted.

In the mixed acid immersion treatment step 45, the top ring groove exposed from the masking member is immersed in the mixed acid treatment liquid to elute the Cu component in the region with a predetermined processing depth from the processed surface of the top ring groove. A freely chosen type of mixed acid treatment liquid may be used, as long as the Cu component can be eluted from the aluminum alloy. For example, it is possible to use an aqueous solution of a mixture of at least two acids selected from nitric acid, hydrofluoric acid, sulfuric acid, and the like. In particular, it is preferable to use the aqueous solution of mixture of nitric acid and hydrofluoric acid, which exhibits excellent performance of eluting such components as copper and silicon. Preferably, the concentration of nitric acid in the mixed acid treatment liquid is in a range of 40 to 60 mass%, and the concentration of hydrofluoric acid is in a range of 5 to 15 mass%. Preferably, the mixture mass ratio of the nitric acid and hydrofluoric acid is in a range of 3:1 to 10:1.

As shown in Fig. 2B, in the mixed acid immersion treatment step 45, immersion in the mixed acid treatment liquid elutes the Cu component in the α-phase 14 in the region with the predetermined processing depth as well as the needle-like silicon 16. The primary crystal silicon 15 is eluted, while partially remaining on the surface 13s of the top ring groove. As the primary crystal silicon 15 and the needle-like silicon 16 are eluted, the heat insulation layer 27a has a concavo-convex surface 17. As the primary crystal silicon 15 partially remained in the heat insulation layer 27a is shaped into a large mass, generation of a large concave portion can be suppressed. This makes it possible to prevent large increase in surface roughness of the heat insulation layer 27a. In addition, the primary crystal silicon and the needle-like silicon on the top ring groove surface become obstacles to formation of an anodized film having a smooth surface. Accordingly, reduction of the primary crystal silicon and the needle-like silicon on the surface of the heat insulation layer 27a serves to improve surface smoothness of the anodized film.

Improved surface smoothness of the anodized film significantly contributes to suppression of generation of target substances of European environmental regulations such as PM and PN, and suppression of increase in the number of the target substances. The improvement in the surface smoothness of the anodized film further improves the sealing property at the top ring groove, thus contributing to improved fuel efficiency as a result of reducing blow-by gas amount.

The mixed acid immersion treatment allows the primary crystal silicon 15 to be partially remaining. Preferably, the processing depth of the base material in the mixed acid immersion treatment, to be described in detail later, is set to 30 µm or less based on findings of the inventors of the present invention. That is, the processing depth of the base material in the mixed acid immersion treatment is proportional to quantity of the primary crystal silicon 15 on the surface of the heat insulation layer 27a to be formed in the mixed acid immersion treatment. More preferably, the processing depth of the base material is set to 20 µm or less, and further preferably, 15 µm or less.

The processing depth of the base material in the mixed acid immersion treatment step 45 exceeds a value that is 1/2 of the thickness of the anodized film to be formed in the anodizing treatment step 35. The depth is set as described above on the grounds that the anodized film is derived from anodically oxidizing aluminum, and as shown in Figs. 2B and 2C, the surface treated anodized film 20 has its surface raised up from the heat insulation layer 27a before execution of the anodizing treatment by an amount corresponding to a dimension approximately 1/2 of the thickness of the anodized film 20. In other words, the surface of the surface treated heat insulation layer 27b (interface with the anodized film 20) is lowered by an amount approximately 1/2 of the thickness of the anodized film 20. In order for the heat insulation layer 27 to remain after execution of the anodizing treatment, the processing depth of the base material is set to be in excess of the value 1/2 of the thickness of the anodized film 20 to be formed. Specifically, it is preferable to set the processing depth of the base material to a value greater than 2.5 µm, more preferably greater than 5.0 µm, and further preferably greater than 7.5 µm. Preferably, the processing depth of the base material is set to a value as a total of a value 1/2 of the thickness of the anodized film to be formed, and the thickness value of the heat insulation layer 27b to be remaining after execution of the anodizing treatment. In this case, preferably, the upper limit of the processing depth of the base material is set to 30 µm or less, more preferably 20 µm or less, and further preferably 15 µm or less.

The processing depth of the base material in the mixed acid immersion treatment can be controlled on the basis of the immersion time in the mixed acid treatment liquid. Although it is influenced by concentration of the mixed acid treatment liquid, and the composition of the aluminum alloy as the base material, setting the immersion time to 10 seconds or longer allows the processing depth of the base material to be more than 2.5 µm. Setting the immersion time to 30 seconds or longer allows the processing depth of the base material to be more than 7.5 µm. Setting the immersion time to 120 seconds or less allows the processing depth of the base material to be 30 µm or less. Setting the immersion time to 80 seconds or less allows the processing depth of the base material to be 20 µm or less. Setting the immersion time to 60 seconds or less allows the processing depth of the base material to be 15 µm or less.

The degree of the mixed acid process in the mixed acid immersion treatment step 45 can be expressed by the surface roughness (in particular, surface roughness Ra) of the surface 17 of the heat insulation layer 27a after the mixed acid immersion treatment. As prescribed in JIS B0601, the surface roughness Ra refers to the arithmetic average roughness of the contour curve. As the processing depth of the base material is increased in the mixed acid process, the value of the surface roughness Ra of the heat insulation layer after the mixed acid immersion treatment tends to be greater. Preferably, the lower limit of the surface roughness Ra is 0.3 µm or more, more preferably 0.5 µm or more, and further preferably 0.8 µm or more. Preferably, the upper limit of the surface roughness Ra is 3.2 µm or less, more preferably 2.4 µm or less, and further preferably 1.6 µm or less.

The washing step 46 is executed subsequent to the mixed acid immersion treatment step 45. Thereafter, the demasking step 47 is executed. As shown in Fig. 3, the anodizing treatment step 35 is then executed. As described above, the anodized film is formed in the anodizing treatment step 35 while maintaining application of the predetermined masking. Subsequently, the masking member is removed.

Although not shown, in the anodizing treatment step 35, the electrode plate made of titanium or carbon as the cathode, and the piston for an internal combustion engine as the anode, are immersed in the electrolyte of sulfuric acid, oxalic acid or the like in an electrolytic vessel, to which electricity is applied from the power source for electrolytic treatment. The inner surface of the top ring groove of the piston for an internal combustion engine is oxidized. After the electrolytic treatment, the anodized film 20 is formed on the surface of the heat insulation layer 27b, as shown in Fig. 2C. The thickness of the heat insulation layer 27b subsequent to the anodizing treatment corresponds to the one obtained by removing 1/2 of the thickness of the anodized film 20 from the thickness of the heat insulation layer 27a prior to the anodizing treatment.

In the anodizing treatment step 45, the conventional electrolytic process can be expansively employed for forming the anodized film on the inner surface of the top ring groove. As for the electrolytic process liquid, it is possible to use acidic processing liquid, for example, sulfuric acid (H₂SO₄), oxalic acid (H₂C₂O₄), phosphoric acid (H₃PO₄), chromic acid (H₂CrO₄), and the like, or basic processing liquid, for example, sodium hydroxide (NaOH), sodium phosphate (Na₃PO₄), sodium fluoride (NaF), and the like. It is preferable to use sulfuric acid from a practical view. It is possible to use a titanium plate, a carbon plate, an aluminum plate, a stainless steel plate, or the like as the cathode plate. It is possible to employ the DC electrolytic process, the AC/DC superposition electrolytic process for superposing AC current on DC current, or the like as the electrolytic process. It is preferable to employ the AC/DC superposition electrolytic process. The AC/DC superposition electrolytic process allows repeated application of the positive voltage for forming the coating and the negative voltage for removing electrical charges accumulated on the coating alternately to suppress intensive electricity flow to the specific part. The resultant coating has uniform thickness and small surface roughness. The good surface smoothness of the anodized film improves the sealing property between the piston ring groove and the piston ring.

In the embodiment, the aluminum alloy as the base material contains at least one element selected from the group consisting of nickel (Ni), chromium (Cr), titanium (Ti), zirconium (Zr), phosphorus (P), iron (Fe), manganese (Mn), and magnesium (Mg), in addition to Si and Cu as described above. The remaining part of the alloy is substantially made of Al and unavoidable impurities. Preferably, the aluminum alloy as the base material contains Ni by 1.5 to 3.5 mass%, Cr by 0.05 to 0.15 mass%, Ti by 0.05 to 0.20 mass%, Zr by 0.05 to 0.30 mass%, Fe by 0.10 to 0.31 mass%, Mn by 0.05 mass% or lower, and Mg by 0.5 to 1.1 mass% in addition to the respective content ranges of Si and Cu as described above. The remaining part is substantially made of Al and unavoidable impurities. The explanations on Si and Cu have already been made, and accordingly, other components and contents thereof will be described.

The component Ni mainly serves to improve strength and wear resistance in a high temperature zone, and to lower the thermal expansion coefficient. The Ni content of 1.5 mass% or more exhibits favorable effects. The Ni content of 3.5 mass% or less exhibits an excellent elongation property.

The component Cr mainly serves to enhance the crystal grain boundary between crystal grains of the intermetallic compound, the primary crystal silicon, the needle-like silicon, and the like, which have been crystallized in the alloy so that strength in a high temperature zone is improved. The Cr content of 0.05 mass% or more allows the crystal grain boundary to be favorably intensified to enhance strength in a high temperature zone. The Cr content of 0.15 mass% or less exhibits excellent toughness and cutting property.

The component Ti mainly serves to micronize crystal grains to improve heat resistance, castability, and strength. The Ti content in a range of 0.05 to 0.20 mass% exhibits favorable effects. Preferably, the Ti content is in a range of 0.05 to 0.15 wt%.

The component Zr mainly provides the effect of micronizing crystal grains in the alloy to contribute to improvement in heat resistance, castability, and strength. The Zr content in a range of 0.05 to 0.30 mass% exhibits favorable effects. Preferably, the Zr content is in a range of 0.05 to 0.15 wt%.

The component Fe mainly serves to crystallize the intermetallic compound to improve wear resistance and strength in the high temperature zone. If the intermetallic compound is in a large and coarse state, strength is reduced. The Fe content in a range of 0.10 to 0.31 mass% allows reduction in size of the Fe-Mn-based intermetallic compound.

The component Mn mainly serves to crystallize the intermetallic compound to improve wear resistance and strength in the high temperature zone. If the intermetallic compound is in a large and coarse state, strength is reduced. An Mn content of 0.05 mass% or less allows reduction in size of the Fe-Mn-based intermetallic compound. The lower limit value of the Mn content may be 0.001 mass%, for example, since Mn does not have to be contained at all, or Mn may be contained in an amount as low as that of the impurities.

The Mg component primarily serves to improve strength and toughness. A Mg content of 0.5 mass% or more exhibits the effect of improving strength. A Mg content of 1.1 mass% or less exhibits excellent toughness.

In this embodiment, the heat insulation layer and the anodized film are formed on the inner surface of the top ring groove by masking areas where the first and the second lands are positioned. The present invention is not limited to the one as described above. The heat insulation layer and the anodized film may be formed on the inner surface of the top ring groove and the piston crown surface by masking an area where the second land is positioned in the masking step. It is also possible to form them on the respective inner surfaces of the top ring groove and the second ring groove by masking areas where the first and the third lands are positioned. It is still possible to form them on the respective inner surfaces of the top ring groove and the second ring groove, and the piston crown surface by masking an area where the third land is positioned. Any one of the processes exhibits an excellent heat insulation effect so that cooling loss of the piston can be reduced.

In this embodiment, the piston for an internal combustion engine has been described on the assumption that it is installed in a port injection type spark ignition combustion engine. The present invention is not limited to that described above. The piston for an internal combustion engine according to the present invention is applicable to pistons for direct injection type spark ignition combustion engines, diesel engines, premixed compressionignition combustion engines, CNG (Compressed Natural Gas) engines, general purpose engines, and the like.

### [Examples]

Hereinafter, Examples according to the present invention and Comparative Examples will be described. The piston for an internal combustion engine and the method for manufacturing the same according to the present invention are not limited to Examples and Comparative Examples to be described hereinafter.

### [Example 1]

The cast material of Al-Si-based aluminum alloy with composition shown in Table 2 was used. The cast material was subjected to the heat treatment, called "T6 treatment", widely applicable to aluminum alloys for pistons. Then it was processed into a test piece simulating the piston for an internal combustion engine (hereinafter referred to as a high-strength material). The inner surface of the top ring groove was finished through a cutting process. The surface roughness Ra measured 0.07 µm in a very smooth state.

[Table 2]

**Table 2. Base Material Composition (mass%)**

| | Si | Cu | Ni | Cr | Ti | Zr | F | Mn | Mg |
|---|---|---|---|---|---|---|---|---|---|
| Example 1 | 12.5 | 3.7 | 2.9 | 0.1 | 0.1 | 0.1 | 0.3 | 0.05 | 1.0 |
| Comparative Example 1 | 11.0 | 0.8 | 0.8 | 0.1 | 0.1 | 0.1 | 0.3 | 0.05 | 1.0 |

### [Comparative Example 1]

The test piece simulating the piston for an internal combustion engine was produced using the conventional AC8A aluminum alloy in a manner similar to Example 1 (hereinafter referred to as "ordinary material").

### (Measurement of surface roughness with respect to mixed acid immersion time)

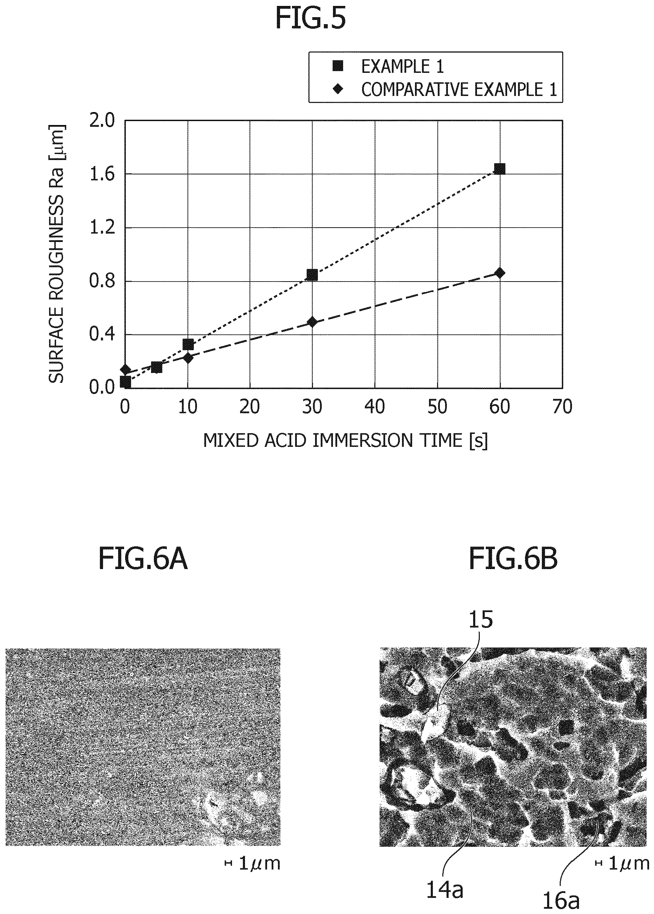

The surface roughness of each of the test pieces of Example 1 and Comparative Example 1 was measured at predetermined time intervals through immersion in the mixed acid treatment liquid at room temperature. Change in surface roughness with respect to the mixed acid immersion time was evaluated. The arithmetic average roughness (surface roughness Ra) of the test piece surface was measured through the method compliant with JIS B 0601-2001 under the conditions that the measurement length was 4 mm, and the cutoff value was 0.8 mm. The solution with the predetermined mixing mass ratio of nitric acid, hydrofluoric acid, and water (50:6:44 mass%) was used as the mixed acid treatment liquid. Measurement results are shown in Fig. 5.

As shown in Fig. 5, it was confirmed that the surface roughness Ra of the high-strength material (Example 1) with respect to the mixed acid immersion time tended to be increased compared with ordinary material (Comparative Example 1). It can be considered that the content of metal that is likely to be eluted in the high-strength material such as copper is greater than that of ordinary material. In Example 1 and Comparative Example 1, it is confirmed that the surface roughness Ra increased in proportion to the immersion time. It can be considered that the longer the immersion time is, the more the needle-like silicon (including Cu) is eluted at the processed surface as well as the primary crystal silicon that is difficult to elute compared with the needle-like silicon. In the case of an immersion time of 10 seconds or longer, the surface roughness Ra measured 0.4 µm or more. In the case of immersion time of 30 seconds or longer, the surface roughness Ra measured 0.8 µm or more. In the case of immersion time of 60 seconds, the surface roughness Ra measured 1.6 µm. In the case of immersion time of 10 seconds, the processing depth was 2.5 µm. In the case of immersion time of 30 seconds, the processing depth was 7.5 µm. In the case of immersion time of 60 seconds, the processing depth was 15 µm.

### (Observation of processed surface of the top ring groove before and after mixed acid immersion treatment)

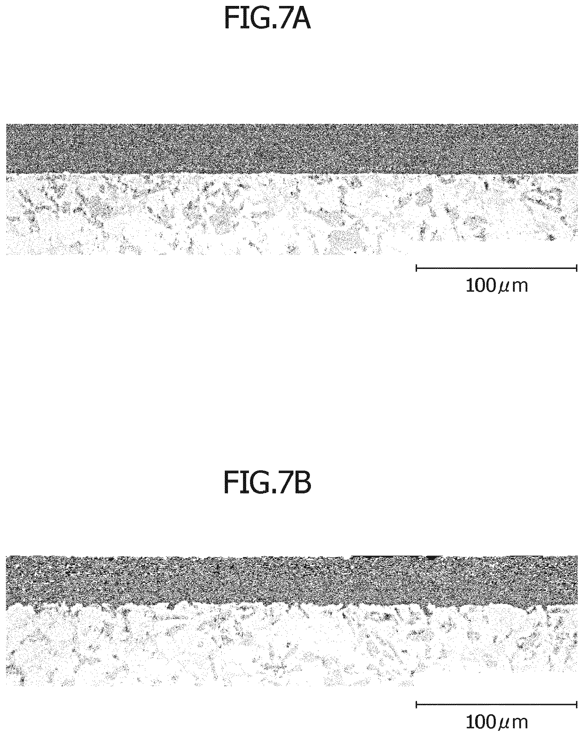

The test piece of Example 1 was observed with respect to the processed surface of the top ring groove before the mixed acid immersion treatment, the processed surface of the top ring groove after an elapse of immersion time of 30 seconds in the mixed acid immersion treatment, and each cross section of the processed surfaces using the mixed acid treatment liquid. The change in the processed surface of the top ring groove before and after the mixed acid immersion treatment was evaluated. A scanning electron microscope (SEM) was used for the surface observation. The test piece was cut for observing the cross section of the processed surface of the top ring groove. The surface roughness Ra was measured in the similar manner to the measurement of the surface roughness as described above. Fig. 6A shows a photographed image of the processed surface before the mixed acid immersion treatment. Fig. 6B shows a photographed image of the processed surface after the mixed acid immersion treatment. Fig. 7A shows a photographed image of the cross section of the processed surface before the mixed acid immersion treatment. Fig. 7B shows a photographed image of the cross section of the processed surface after the mixed acid immersion treatment.

As shown in Fig. 6A, the processed surface of the top ring groove before the mixed acid immersion treatment exhibits a very smooth state. On the other hand, as shown in Fig. 6B, the processed surface of the top ring groove after the mixed acid immersion treatment exhibits the concavo-convex state. This is attributable to many observed parts 14a estimated as areas where Cu in the α-phase was eluted, and many observed parts 16a estimated as areas where the Cu-containing needle-like silicon was eluted. The remaining primary crystal silicon 15 was confirmed. As shown in Fig. 7A, the cross section of the processed surface of the top ring groove before the mixed acid immersion treatment exhibited a very smooth state, and the surface roughness Ra measured 0.07 µm. On the other hand, as shown in Fig. 7B, the cross section of the processed surface of the top ring groove after the mixed acid immersion treatment exhibited many concave portions caused by elution of Cu in the α-phase and the needle-like silicon (including Cu), and partial elution of the primary crystal silicon through the mixed acid immersion treatment. The surface roughness Ra measured 0.85 µm.

### [Example 2]

The mixed acid immersion treatment was executed on the processed surface of the top ring groove of the test piece prepared as Example 1 for 30 seconds at room temperature using the mixed acid treatment liquid. Subsequent to the mixed acid immersion treatment, the anodizing treatment was performed on the top ring groove. The anodizing treatment was performed using sulfuric acid at 5°C as the electrolyte. In the anodizing treatment, titanium was used as the cathode plate having its surface treated for improving chemical resistance, the test piece was attached to the anode plate, and a jig was used to allow application of the electrolyte only to the top ring groove. The AC/DC superposition electrolytic process was employed as the electrolytic process. The anodizing treatment was executed for 40 seconds through potentiostatic electrolysis by setting the positive voltage to 65 V, the negative voltage to -2 V, and frequency to 12 kHz.

### [Comparative Example 2]

The anodizing treatment was performed on the test piece prepared as Example 1 in the similar manner to Example 2 except that the mixed acid immersion treatment was not executed.

### (Evaluation of anodic oxidation coated top ring groove)

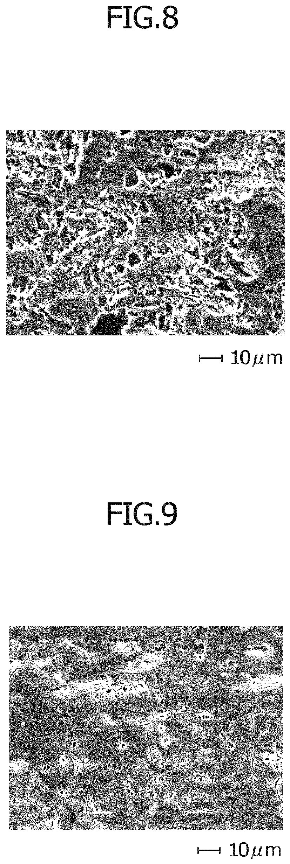

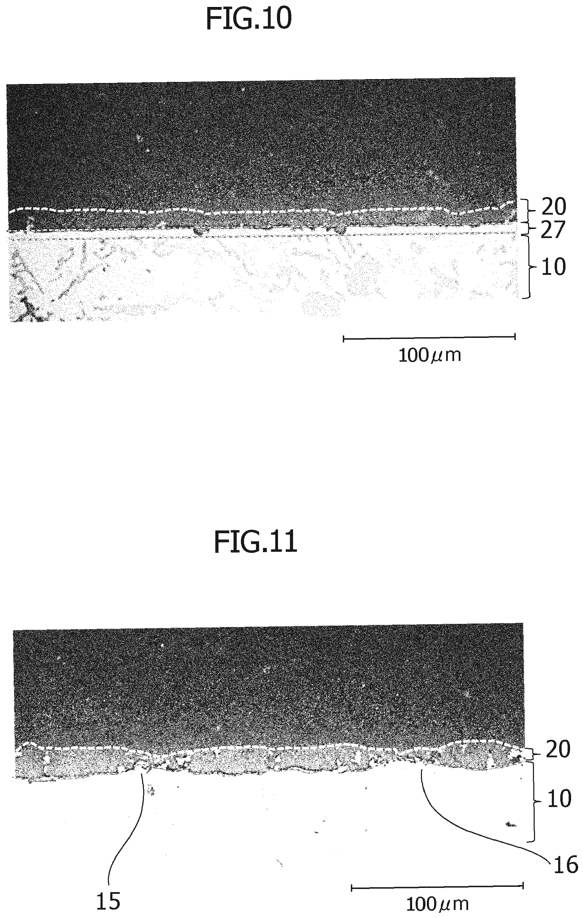

Each surface of the anodic oxidation coated top ring grooves in Example 2 and Comparative Example 2 was observed to measure the thickness and the surface roughness of the anodized film. Differences in the anodized film between execution and non-execution of the mixed acid immersion treatment were evaluated. The surface observations and the surface roughness measurements were carried out in a manner similar to that described above. The test piece was cut to measure the thickness of the anodized film at its cross section at 10 equally spaced points using an optical microscope. An average of the measured values was calculated as the thickness. Fig. 8 shows a photographed image of the surface of the anodized film of Example 2. Fig. 9 shows a photographed image of the surface of the anodized film of Comparative Example 2. Fig. 10 shows a photographed image of the cross section of the anodic oxidation coated top ring groove of Example 2. Fig. 11 shows a photographed image of the cross section of the anodic oxidation coated top ring groove of Comparative Example 2.

As shown in Fig. 8, many micropores are confirmed on the surface of the anodized film of Example 2. On the other hand, as shown in Fig. 9, the micropores are confirmed on the anodized film of Comparative Example 2, which are less than those of Example 2. It is confirmed from the results that many micropores are formed on the anodized film through the mixed acid immersion treatment so that heat insulation performance is improved.

As shown in Fig. 10, the cross section of the top ring groove of Example 2 has the heat insulation layer 27 with thickness of several µm between the anodized film 20 and the base material 10 in the absence of the primary crystal silicon and the needle-like silicon. On the other hand, as shown in Fig. 11, the cross section of the top ring groove of Comparative Example 2 shows the presence of the primary crystal silicon 15 and the needle-like silicon 16 below the anodized film 20. The layer that is different from the base material 10 like in Example 2 was not confirmed. The surface roughness Ra and the thickness of the anodized film of Example 2 were 0.77 µm and 12.0 µm, respectively. The surface roughness Ra and the thickness of the anodized film of Comparative Example 2 were 1.75 µm and 14.1 µm, respectively. As the results indicate, in both Examples, there was no great difference in the thickness between execution and non-execution of the mixed acid immersion treatment. In addition, the surface roughness is reduced by almost half. The mixed acid immersion treatment can be assumed to significantly contribute to the surface smoothness of the anodized film. This is attributable to elution of the primary crystal silicon and the needle-like silicon (including Cu) as the cause of the concavo-convex state on the anodized film by the mixed acid immersion treatment.

### [Reference Signs List]

- 1:: Piston for internal combustion engine
- 10:: Base material of piston
- 11:: Piston crown surface
- 12:: Outer circumferential surface of piston
- 12a:: First land
- 12b:: Second land
- 13:: Top ring groove
- 13a:: Upper surface of top ring groove
- 13b:: Side surface of top ring groove
- 13c:: Lower surface of top ring groove
- 14:: α-phase
- 15:: Primary crystal silicon
- 16:: Needle-like silicon
- 17:: Heat insulation layer surface after execution of mixed acid immersion treatment
- 20:: Anodized film
- 27:: Heat insulation layer
- 30:: Top ring
- 40:: Cylinder

## Claims

1. A method for manufacturing a piston for an internal combustion engine, the method comprising:
a masking step for masking a main body of the piston for an internal combustion engine, the main body made of an aluminum alloy as a base material that contains Si at 5.0 to 20.0 mass%, and Cu at more than 1.3 mass% to 5.0 mass% to expose at least an inner surface of a top ring groove;
a mixed acid immersion treatment step for immersing the masked main body of the piston in aqueous mixed acid solution, and eluting Cu in a region with a depth from the inner surface of the exposed top ring groove, the depth corresponding to 1/2 or more of a thickness of an anodized film to be formed; and
an anodizing treatment step for forming the anodized film with the expected thickness on the inner surface of the top ring groove of the main body of the piston taken from the aqueous mixed acid solution.

2. The method according to claim 1, wherein the mixed acid immersion treatment step elutes a needle-like silicon in the region so that Cu is eluted from an α-phase of the aluminum alloy, and partially keeps a primary crystal silicon non-eluted.

3. The method according to claim 1 or 2, wherein in the mixed acid immersion treatment step, a surface roughness Ra of the top ring groove where Cu is eluted is in a range from 0.4 to 3.2 µm.

4. The method according to any one of claims 1 to 3, wherein in the anodizing treatment step, the anodized film is formed through an AC/DC superposition electrolytic process.

5. A piston for an internal combustion engine, having a top ring groove, the piston comprising:
an aluminum alloy as a base material that contains Si at 5.0 to 20.0 mass%, and Cu at 1.3 mass% to 5.0 mass%;
a heat insulation layer positioned on an inner surface of the top ring groove, the heat insulation layer with an aluminum alloy composition having a Cu content lower than that of the base material; and
an anodized film positioned on a surface of the heat insulation layer.

6. The piston according to claim 5, wherein a thickness of the heat insulation layer is in a range of 1.0 µm to 50 µm.

7. The piston according to claim 5 or 6, wherein a cell of the anodized film extends in random directions relative to the inner surface of the top ring groove, and the cell surrounds a periphery of silicon in the anodized film in a state of being branched in random directions.
